# FASCICULE DE BREVET EUROPEEN

(11) **EP 4 281 938 B1**
(45) Date de publication et mention de la délivrance du brevet: **04.03.2026**
(21) Numéro de dépôt: 22702511.1
(22) Date de dépôt: 11.01.2022
(51) Int. Cl.: G06T 17/20

(54) **PROCEDE DE REALISATION D'UN MODELE NUMERIQUE 3D D'ELEMENT(S) D'AERONEF POUR LA PRODUCTION D'IMAGES EN REALITE AUGMENTEE**
VERFAHREN ZUR ERZEUGUNG EINES DIGITALEN 3D-MODELLS EINES ODER MEHRERER FLUGZEUGELEMENTE ZUR ERZEUGUNG VON BILDERN DER ERWEITERTEN REALITÄT
METHOD FOR CREATING A 3D DIGITAL MODEL OF ONE OR MORE AIRCRAFT ELEMENTS IN ORDER TO PRODUCE AUGMENTED REALITY IMAGES

(30) Priorité: 19.01.2021 FR 2100482
(43) Date de publication de la demande: 29.11.2023
(73) Titulaire: Safran Landing Systems, 78140 Vélizy-Villacoublay (FR)
(72) Inventeur: FAURON, Dimitri Alain, 77550 MOISSY-CRAMAYEL (FR); KLEIN,, Guillaume Jules Pierre, 77550 MOISSY-CRAMAYEL (FR)
(74) Mandataire: Santarelli
(86) Numéro de dépôt international: PCT/FR2022/050058
(87) Numéro de publication internationale: WO 2022/157439

(56) Documents cités:
- FR-A1- 3 080 184
- SVENJA KAHN: "Reducing the gap between Augmented Reality and 3D modeling with real-time depth imaging", VIRTUAL REALITY, vol. 17, no. 2, 23 December 2011 (2011-12-23), GB, pages 111 - 123, XP055244589, ISSN: 1359-4338, DOI: 10.1007/s10055-011-0203-0
- KUMAR ET AL: "Sensor Fusion Based Pipeline Inspection for the Augmented Reality System", SYMMETRY, vol. 11, no. 10, 22 October 2019 (2019-10-22), pages 1325, XP055849510, DOI: 10.3390/sym11101325
- ESCHEN HENRIK ET AL: "Augmented and Virtual Reality for Inspection and Maintenance Processes in the Aviation Industry", PROCEDIA MANUFACTURING, vol. 19, 7 November 2017 (2017-11-07), 43rd North American Manufacturing Research Conference, NAMRC 43, 8-12 June 2015, UNC Charlotte, North Carolina, United States, pages 156 - 163, XP055849362, ISSN: 2351-9789, DOI: 10.1016/j.promfg.2018.01.022

## Description

### DOMAINE TECHNIQE ET ETAT DE LA TECHNIQUE ANTÉRIEURE

La présente invention concerne le domaine de l'acquisition et du traitement de données pour la mise en œuvre d'un système numérique de réalité augmentée dédié à l'inspection d'aéronefs ou d'éléments d'aéronefs, par exemple afin de fournir une assistance lors des opérations de maintenance sur un aéronef ou sur un élément d'aéronef.

La vérification de l'état de la surface externe d'un aéronef est typiquement réalisée par un opérateur dont le champ de vision est limité.

Pour améliorer une procédure d'inspection d'un dispositif on peut chercher à vouloir aider l'opérateur réalisant cette inspection en élaborant un système numérique de réalité augmentée dans lequel on superpose à une image réelle un ou plusieurs éléments virtuels sous forme d'un ou plusieurs d'objets 3D incrustés dans une séquence d'images et représentatifs d'éléments du dispositif. De tels objets 3D peuvent être alors typiquement établis à partir de modèles issus d'un logiciel de CAO (« Conception Assistée par Ordinateur ») et entièrement conçus par le biais de ce logiciel.

Toutefois, on ne dispose pas nécessairement d'un modèle 3D de toutes les pièces du dispositif en question.

Par ailleurs, certains modèles 3D issus d'outils de CAO peuvent être confidentiels.

Enfin, certains modèles 3D issus d'outils de CAO peuvent s'avérer insuffisants et/ou pas directement exploitables par un système numérique permettant d'implémenter et projeter des images en réalité augmentée.

La méthode proposée en SVENJA KAHN: "Reducing the gap between Augmented Reality and 3D modeling with real-time depth imaging",VIRTUAL REALITY, vol. 17, no. 2, 23 décembre 2011 (2011-12-23), pages 111-123, ISSN: 1359-4338, DOI: 10.1007/s10055-011-0203-0 D1 détecte en temps réel les différences entre une scène et un modèle 3D de cette scène. Ensuite, les différences géométriques détectées sont utilisées pour mettre à jour le modèle 3D, rapprochant ainsi la réalité augmentée et la modélisation 3D.

### EXPOSÉ DE L'INVENTION

Un but de l'invention est de proposer un procédé amélioré de réalisation d'au moins un modèle numérique 3D d'au moins une partie d'une pièce ou d'au moins une pièce ou d'un ensemble de pièces d'aéronef pour la production d'image(s) en réalité augmentée. L'invention est définie par la revendication indépendante. D'autres aspects sont définis par les revendications dépendantes .

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
[Fig. 1] sert à illustrer une étape d'acquisition à l'aide d'un scanner, dans cet exemple de type sans contact, d'un nuage de points d'au moins un élément d'aéronef en vue de la constitution d'un modèle 3D de cet élément et de l'utilisation de ce modèle 3D dans une image de réalité augmentée ;
[Fig. 2] sert à illustrer une étape de calibration du scanner au moyen d'une plaque comportant un ensemble de trous ;
[Fig. 3A]

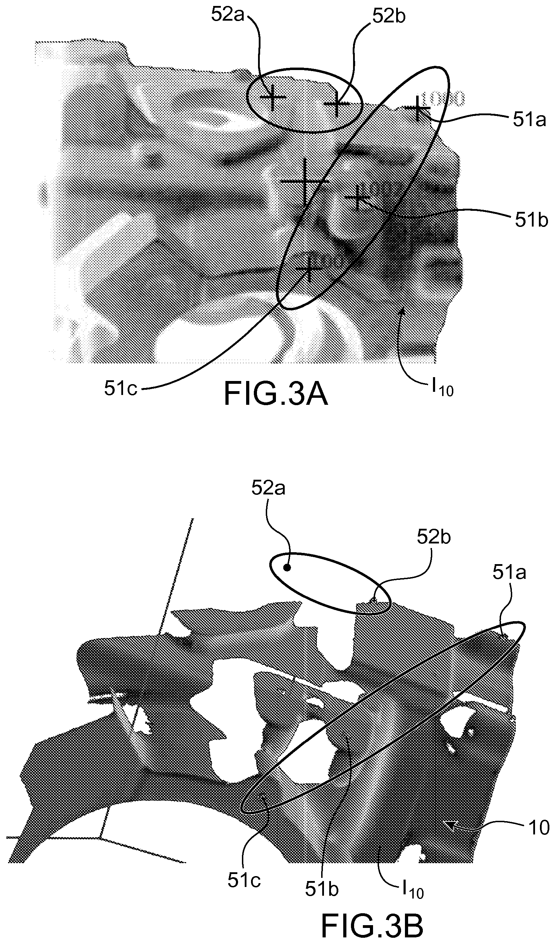

[Fig. 3B] servent à illustrer un nuage de points obtenus par numérisation d'un élément d'aéronef ;

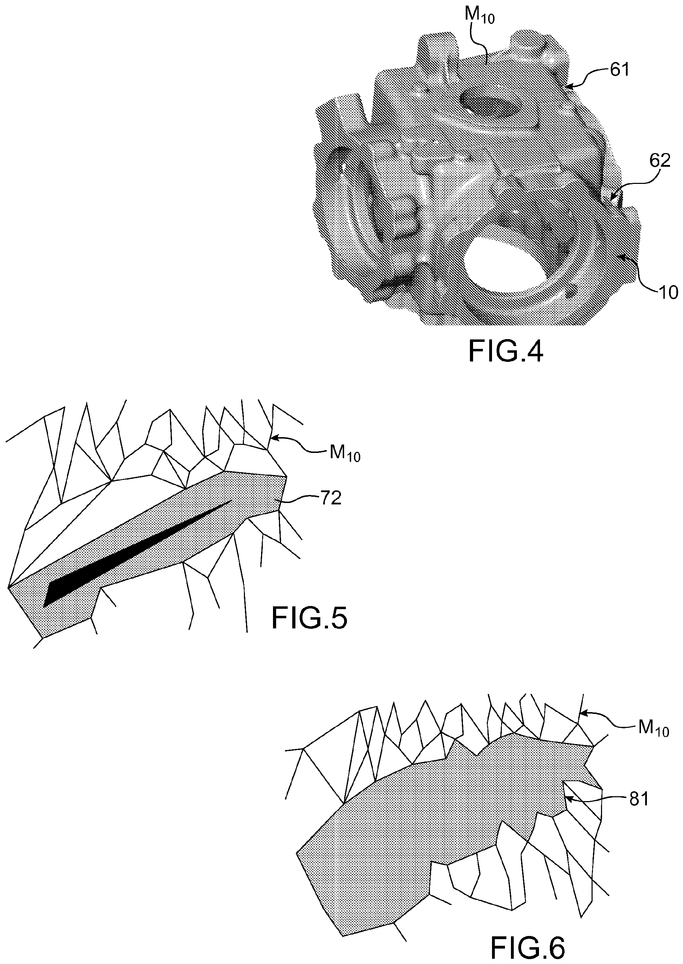

[Fig. 4] sert à illustrer un maillage de la pièce obtenu à partir du nuage de points précité ;
[Fig. 5] sert à illustrer une étape de suppression d'une cellule triangulaire du maillage précité ;
[Fig. 6] sert à illustrer une étape d'ajout de cellules triangulaires sur le maillage précité ;

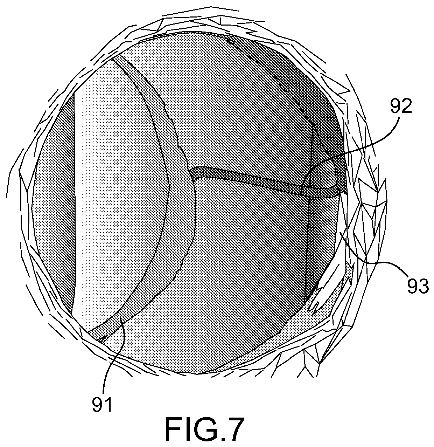

[Fig. 7] sert à illustrer une réparation ou correction du maillage par mise en œuvre d'une sous-étape de réunion de surfaces ;
[Fig. 8A]

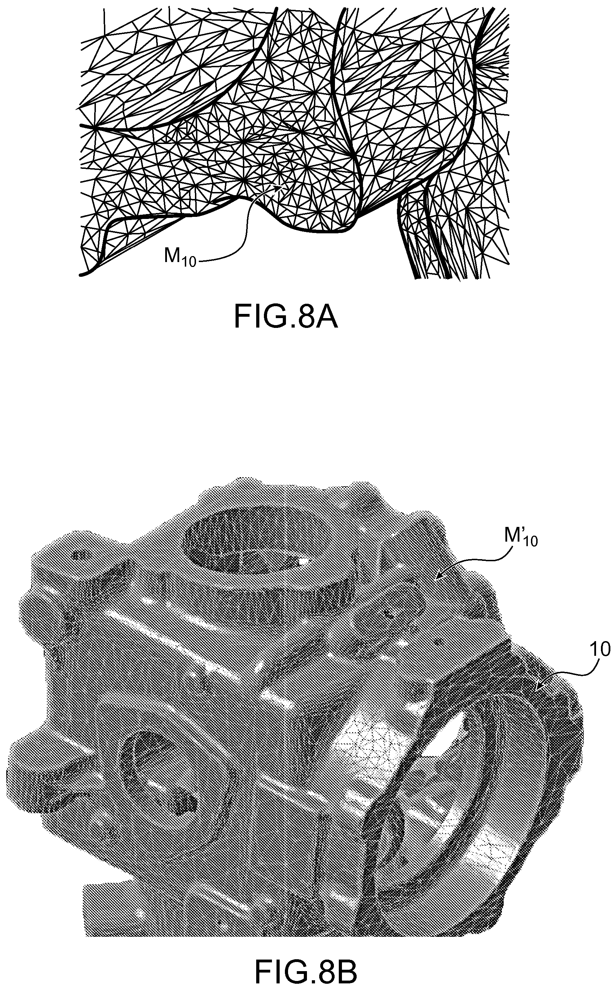

[Fig. 8B] servent à illustrer une étape de simplification de maillage 3D°;

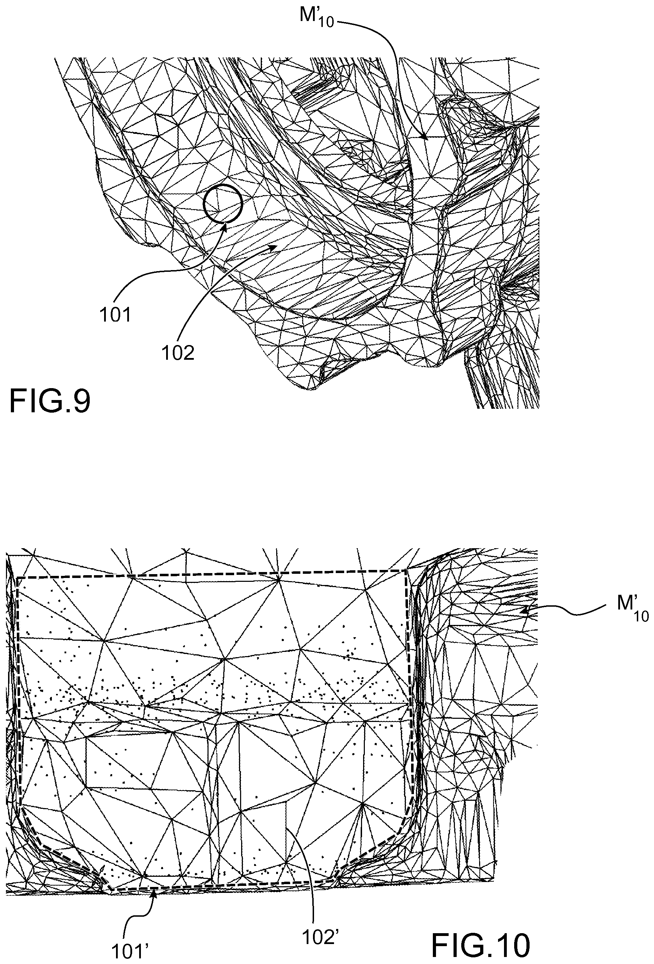

[Fig. 9] sert à illustrer un premier mode de sélection de cellules d'une surface d'un maillage 3D en vue son découpage ;
[Fig. 10] sert à illustrer un deuxième mode de sélection de cellules d'une surface d'un maillage 3D en vue son découpage ;
[Fig. 11]
[Fig. 12]

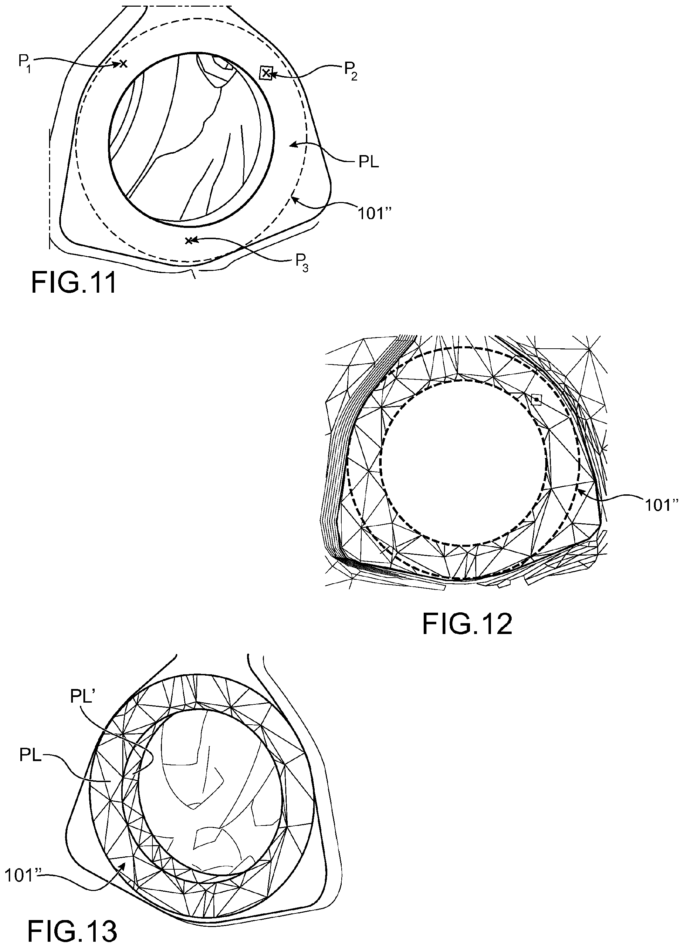

[Fig. 13] servent à illustrer une création d'une zone de sélection de forme particulière pour réaliser un découpage de maillage 3D ;
[Fig. 14A]

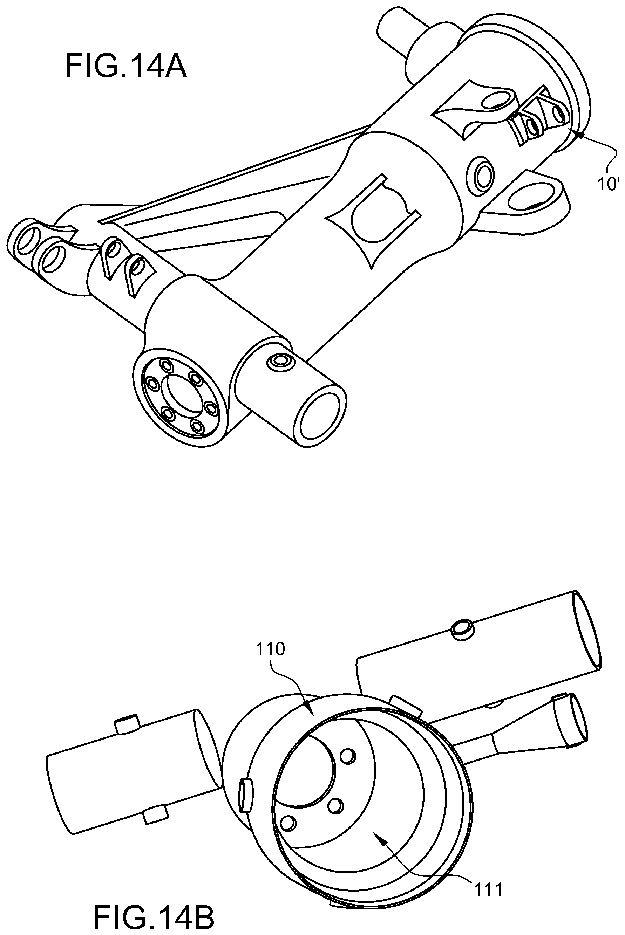

[Fig. 14B] servent à illustrer une reconstruction du volume interne d'un modèle de pièce ;
[Fig. 15]

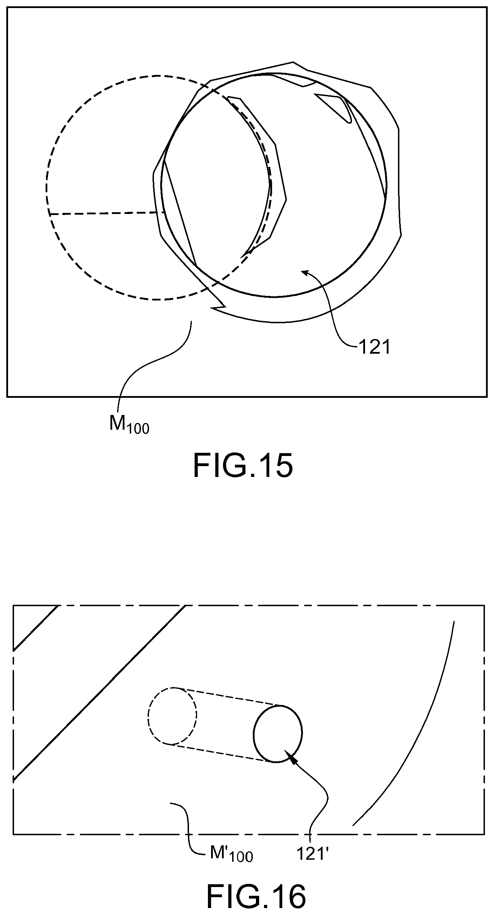

[Fig. 16] servent à illustrer une étape de reconstruction du volume interne d'un modèle de pièce ;
[Fig. 17A]

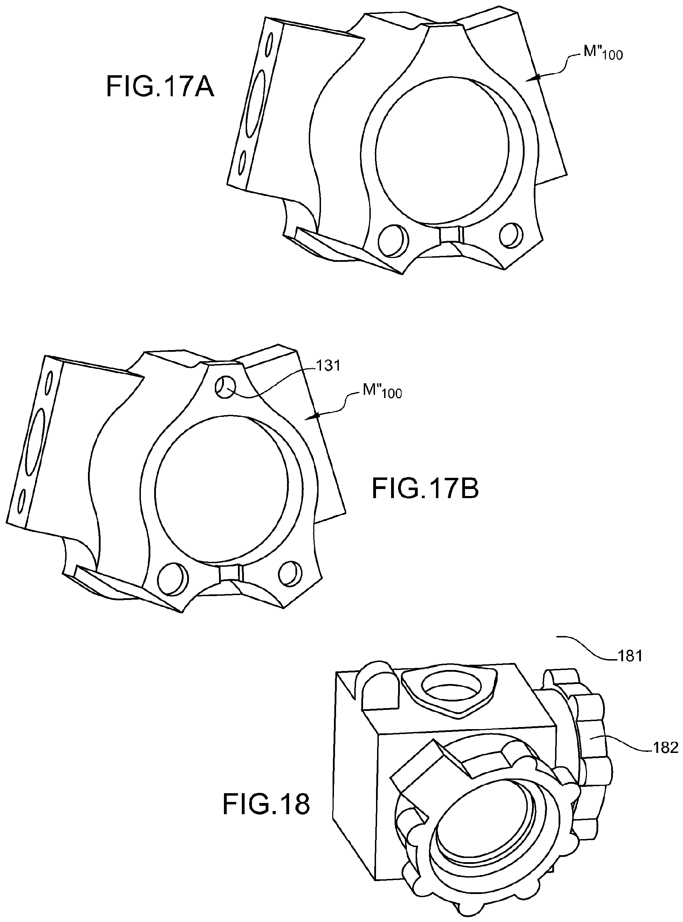

[Fig. 17B] servent à illustrer une autre étape de reconstruction du volume interne d'un modèle de pièce ;
[Fig. 18] sert à illustrer un modèle 3D de pièce d'aéronef insérée dans une image de réalité augmentée et qui a été obtenu par numérisation à l'aide d'un scanner puis traitements numériques d'au moins un maillage issu de cette numérisation ;
[Fig. 19A]
[Fig. 19B]
[Fig. 19C]
[Fig. 20A]
[Fig. 20B]

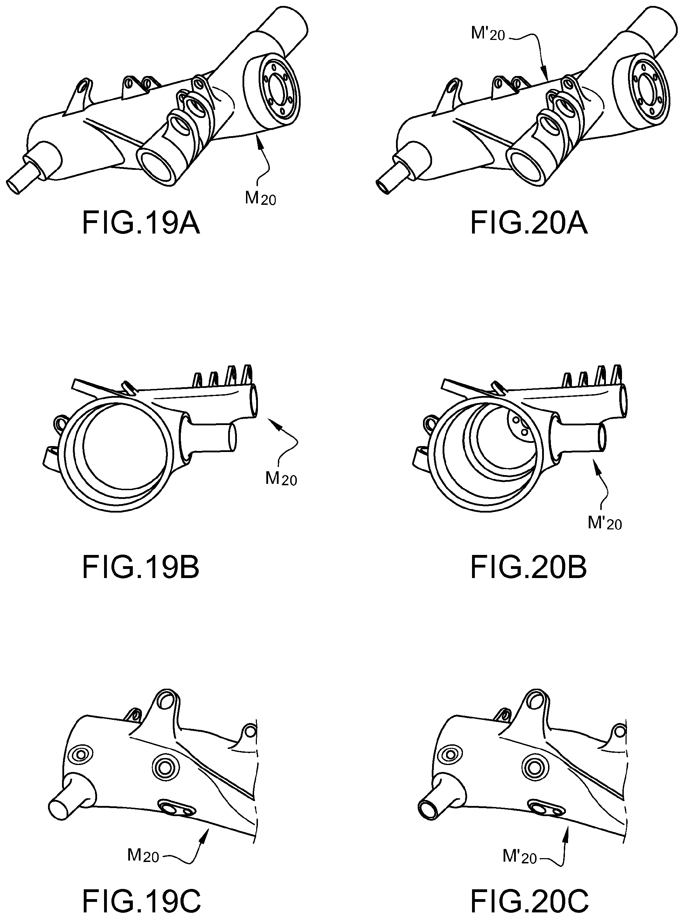

[Fig. 20C] servent à illustrer la transformation d'un modèle 3D de pièce d'aéronef obtenu par numérisation à l'aide d'un scanner en un modèle 3D à géométrie interne reconstruite en vue de son utilisation dans des images de réalité augmentée°;
Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

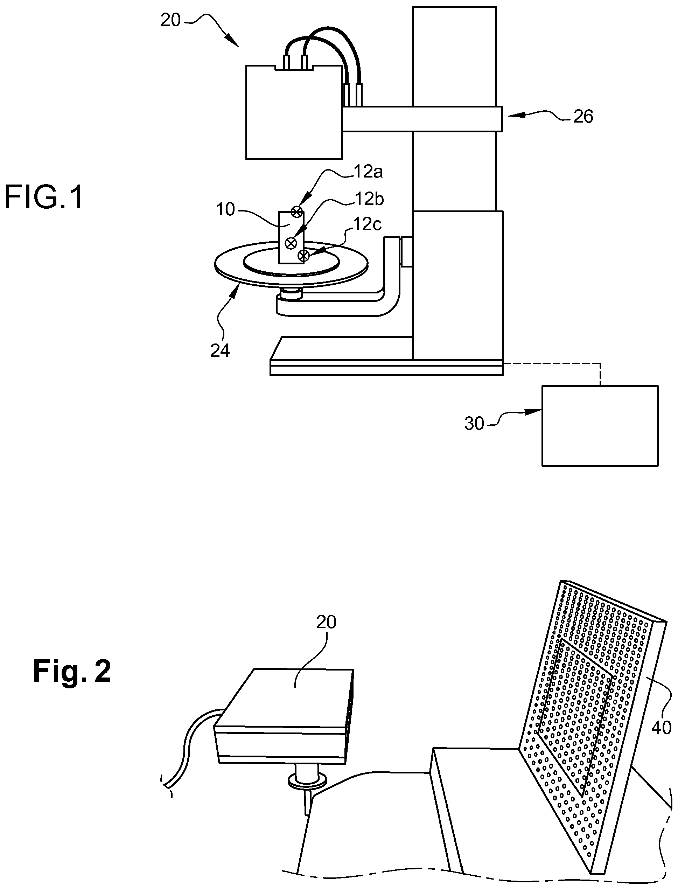

On se réfère tout d'abord à la figure 1 servant à illustrer une étape dite de « numérisation » d'une pièce 10 d'aéronef, et en particulier un modèle 3D utilisable en réalité augmentée. Par souci de simplification on se réfèrera dans la présente description à une pièce 10 d'aéronef mais les traitements décrits peuvent s'appliquer plus généralement à un élément correspondant à une portion de pièce d'aéronef à une pièce d'aéronef ou à un ensemble de pièces d'aéronef en vue de la production d'un modèle 3D de cette portion de pièce ou de cette pièce ou de cet ensemble de pièces. Ce modèle 3D est destiné à être affiché dans une image produite en réalité augmentée et peut être également prévu pour être utilisé afin d'établir un modèle de suivi d'objet servant à la production d'images en réalité augmentée.

La numérisation comprend une étape d'exposition de la pièce 10 à l'aide d'un scanner tridimensionnel 20, typiquement un scanner optique émettant un rayonnement lumineux, par exemple une lumière bleue, en particulier à bande étroite, peut être utilisé pour effectuer une telle numérisation de la forme de la pièce 10. Selon un exemple particulier, un scanner de la gamme ATOS Core fabriqué par la société GOM, en particulier un scanner ATOS Core 5M MV300 peut être employé.

Cette étape participe à la création d'un modèle 3D de manière rapide tout en s'affranchissant d'une utilisation d'objets graphiques enregistrés et entièrement créés à partir d'un logiciel de CAO.

Le scanner 3D 20 produit notamment un ensemble de points numérisés dudit élément dans un espace en 3 dimensions, ces points étant représentatifs de la forme de la pièce 10. Cet ensemble de points est obtenu en projetant à l'aide d'au moins une source de rayonnement lumineux un motif de lumière sur la surface de la pièce 10.

La source de lumière interne peut être par exemple, formée d'un ou plusieurs lasers, par exemple de type à émission de surface à cavité verticale (VCSEL). La source de lumière projette typiquement le rayonnement lumineux de manière stroboscopique ou pulsée, à une fréquence particulière. Une ou plusieurs images de la lumière structurée projetée sur la surface de la pièce 10 est ou sont acquises grâce audit au moins un capteur optique par exemple sous forme d'une ou plusieurs caméras et/ou imageurs. L'ensemble de points numérisés est obtenu à partir de cette ou ces images.

Le scanner tridimensionnel 20 est ici relié à une unité de traitement 30 de données, typiquement un ordinateur, muni(e) notamment d'au moins un processeur de traitement de données et d'une ou plusieurs mémoires.

Le scanner 20 peut être disposé ou fixé sur un support 26, par exemple un bras articulé, mobile selon plusieurs degrés de liberté. Dans l'exemple de réalisation illustré, la pièce 10 d'aéronef à scanner est elle-même agencée sur un support 24 mobile.

De manière optionnelle, une étape d'étalonnage (encore désignée par l'anglicisme « calibration ») préalable du scanner 20 peut être effectuée. Dans l'exemple illustré sur la figure 2, une telle étape est réalisée à l'aide d'une plaque 40 dotée de motifs ayant une répartition régulière connue. Typiquement, la plaque 40 est ajourée et les motifs de calibration sont des trous.

Une étape de préparation de la surface de la pièce 10 à scanner peut être également effectuée afin d'améliorer la qualité de la numérisation. Une telle étape peut consister par exemple à enduire la surface de la pièce 10 d'un revêtement absorbant de rayonnement lumineux, et/ou permettant de modifier sa couleur. Selon un exemple de réalisation particulier, un revêtement à base de MR^{®} 2000 Anti-Reflex L peut être utilisé. Pour permettre d'obtenir un meilleur positionnement des points obtenus lors de l'acquisition d'image, la pièce 10 peut être munie sur sa surface de repères 12a, 12b, 12c par exemple sous forme de vignettes ou de gommettes autocollantes apposées en trois points distincts et non-alignés de la pièce 10.

Les figures 3A-3B servent à illustrer une image I₁₀ d'une pièce 10 scannée d'aéronef avec 3 points 51a, 51b, 51c, de référence correspondant aux positionnements respectifs des vignettes ou gommettes. Ce positionnement sur la pièce 10 est connu et celui de nouveaux points 52a, 52b, est déduit à l'aide de ces points 51a, 51b, 51c de référence. L'acquisition et la détermination de coordonnées de nouveaux points se fait ensuite de manière itérative par recalage par rapport à un nuage de points scannés et dont les coordonnées ont elles-mêmes été déterminées à partir des points 51a, 51b, 51c, 52a, 52b.

Une analyse des points scannés peut être ensuite réalisée par le biais d'une application, plus particulièrement d'un premier outil logiciel de traitement de données qui peut être installé par exemple dans l'ordinateur 30 relié au scanner ou utilisable via cet ordinateur 30. L'outil logiciel en question permet d'effectuer une exploration visuelle et interactive ainsi qu'une représentation graphique de données de mesure importées et un traitement de ces données. Par exemple, un tel outil peut être l'outil « ATOS Gom Scan». Le fichier de points 3D obtenu peut être ensuite corrigé en supprimant certaines éventuelles erreurs ou éléments parasites enregistré(e)s lors de la numérisation.

Par exemple, lorsque la pièce 10 scannée est disposée contre un support tel qu'un tapis de protection, on supprime des points parasites représentatifs de ce support. Il est pour cela possible de définir avec l'outil précité une trappe de sélection permettant de sélectionner des points indésirables, puis, à l'aide d'une fonctionnalité de cet outil, de retirer ces points indésirables.

Un fichier de points 3D corrigé peut être est ensuite traité afin de former un maillage M₁₀. Ce maillage M₁₀ est typiquement formé des points et d'arêtes formant des cellules sous forme de polygones typiquement des triangles ou des quadrilatères. Les cellules sont elles-mêmes constitutives de polyèdres, par exemple de trièdres. Un tel maillage M₁₀ se distingue d'un modèle paramétrique obtenu par outil CAO et contenant un ensemble de fonctions et de paramètres définissant des volumes.

Un tel maillage M₁₀ peut être obtenu notamment à l'aide d'un traitement utilisant par exemple un algorithme de maillage mettant notamment en œuvre une opération de type triangulation de Delaunay.

Le maillage M₁₀ peut être réalisé à l'aide d'un deuxième outil logiciel. Ce deuxième outil peut permettre de réaliser une analyse, une exploration visuelle et interactive, une représentation graphique de données de mesure importées et un traitement de ces données. Un tel outil utilisable par le biais de l'unité de traitement 30 ou ordinateur 30 et éventuellement stocké dans ce dernier peut permettre de réaliser en particulier une analyse de formes, de dimensions, des traitements de maillages 3D. Selon un exemple de réalisation particulier, ce deuxième outil logiciel peut être l'outil « GOM Inspect Suite », en particulier lorsque la numérisation est réalisée à l'aide d'un scanner GOM. Un logiciel de modélisation et de rendu en 3D de type « Blender » ou un logiciel de conception de modèle 3D de type CATIA^{®} peuvent être également utilisés.

Une représentation graphique du maillage M₁₀ de la pièce scannée obtenue à l'aide du deuxième outil est donnée par exemple sur la figure 4. Sur cette figure les mailles ou cellules composant le maillage ne sont pas visibles étant donnée leur densité.

Dans cet exemple de réalisation particulier, le deuxième outil est configuré pour réaliser un décompte d'éléments géométriques figurant sur la représentation graphique de la pièce 10. Ici, par exemple, un nombre de trous distincts du maillage M₁₀ et des cellules le composant, est réalisé et peut être comparé à un nombre de trous figurant réellement sur la pièce 10 dont on a réalisé la numérisation. Une telle fonctionnalité peut permettre d'aider à effectuer une réparation du maillage M₁₀. On peut ainsi identifier des trous 61, 62 correspondants à des parties incomplètes du maillage M₁₀.

On peut ensuite effectuer la réparation du maillage M₁₀. Une telle étape de réparation peut être réalisée à l'aide du deuxième outil précité et comprendre une suppression de certaines cellules, par exemple de cellules aberrantes résultant d'un positionnement inexact d'un ou plusieurs points lors de l'étape de numérisation.

Dans l'exemple de réalisation illustré sur la figure 5, où le maillage est formé de cellules triangulaires, une étape de suppression d'un triangle 71 aberrant situé à l'intérieur d'une zone de sélection 72 est mise en œuvre.

Une interpolation de trou(s), pour modifier le contour d'un ou plusieurs trous ou supprimer un ou plusieurs trous peut être également réalisée, en particulier à l'aide du deuxième outil précité. Dans l'exemple illustré sur la figure 6, un trou 81 que l'on souhaite supprimer est représenté. Il s'agit dans ce cas de réaliser un ajout de cellules pour effectuer la correction.

La réparation du maillage peut également comprendre, en particulier à l'aide du deuxième outil précité, une étape consistant à réunir des surfaces entre elles. Par exemple, lorsque les surfaces à relier sont des portions de parois autour d'un perçage, plutôt que de supprimer ce perçage par exemple à l'aide d'une étape d'interpolation telle qu'évoquée précédemment, on peut réunir ces portions distinctes en une seule surface.

Dans l'exemple illustré sur la figure 7, une telle réunion de surfaces se traduit par la formation d'une surface 92 de pontage reliant des portions 91, 93 de parois d'un trou. Une telle opération peut être par exemple réalisée en sélectionnant au moins deux cellules à relier, ici sous forme de deux triangles disjoints et en utilisant une fonctionnalité de pontage de l'outil précité. On peut répéter une telle opération plusieurs fois pour créer la surface 92 de pontage.

A ce stade, on peut souhaiter reconstituer une ou plusieurs nouvelle(s) surface(s) utiles pour compléter le maillage M₁₀ et en particulier correspondant à des zones situées dans le volume interne de la pièce 10 et qui ne sont pas visibles c'est à dire situées hors du champ de vision du scanner, même lorsque ce dernier est déplacé par rapport à la pièce 10. De telles zones ne figurent ainsi pas parmi l'ensemble de points ou dans le nuage de points numérisés par le scanner évoqués précédemment. On peut également chercher à ne reconstruire que partiellement la géométrie de la pièce et ne privilégier qu'une ou plusieurs surfaces dites « utiles », par exemple correspondant à des surfaces qui, sur une image de réalité augmentée, sont représentées par exemple pour faciliter un démontage ou permettre une mise en exergue de zones particulières. Par exemple on peut souhaiter mettre en évidence sur un modèle 3D des zones à peindre ou à masquer de la pièce 10 lors d'une étape de traitement de peinture effectuée par un opérateur en s'aidant d'un flux d'images en réalité augmentée.

Préalablement à une telle étape de reconstruction, on peut effectuer une simplification du maillage visant à réduire le nombre d'éléments, en particulier de cellules le constituant. Pour effectuer un tel traitement, le maillage résultant de la ou les sous-étapes de réparation effectuées précédemment peut être ensuite exporté vers un troisième outil de traitement de données. Par exemple, on peut utiliser un logiciel de CAO ou de modélisation 3D tel que l'outil CATIA^{®} pour réaliser un tel traitement, le maillage pouvant être dans ce cas exporté sous forme d'un fichier en format .STL. En variante, on peut effectuer une telle étape, avec le premier et/ou le deuxième outil précités. Par exemple, un logiciel de modélisation et de rendu en 3D de type « Blender » développé par la Fondation Blender ou « GOM Inspect Suite » peuvent être utilisés pour réaliser cette simplification.

Une telle simplification où l'on réduit le nombre de cellules, par exemple le nombre de triangles formant le maillage, tout en conservant la forme géométrique globale du maillage, est réalisée typiquement afin d'alléger la taille du ou des fichiers. Un tel allègement est d'autant plus utile que les traitements ultérieurs nécessaires au rendu et aux calculs en temps réel pour pouvoir implémenter une image en réalité augmentée sont généralement importants. Par exemple, on peut chercher à réduire le nombre de cellules, en particulier de triangles réalisant le maillage, à un nombre limite donné fixé par un utilisateur de l'outil, qui peut être par exemple de plusieurs dizaines de milliers de cellules, par exemple de 50 000 triangles. Ce nombre limite est choisi de sorte à conserver une fidélité de forme du maillage avec la pièce 10 réelle et dépend donc de la complexité et de la taille de cette pièce 10. Une telle étape peut être implémentée en utilisant une fonctionnalité particulière du troisième outil logiciel, appelée « décimer » avec laquelle on sélectionne le maillage et on choisit le nombre souhaité de cellules (triangles). Une telle fonctionnalité et/ou une telle étape de simplification peuvent être mises en œuvre à l'aide d'un algorithme de simplification polygonale.

Une telle simplification, avec ici une réduction du nombre de triangles est illustrée sur les figures 8A-8B représentant respectivement un maillage M₁₀ d'une portion de la pièce 10 avant simplification polygonale et un nouveau maillage M'₁₀ de la pièce simplifié obtenu à l'issue d'une étape de simplification polygonale.

La réduction réalisée et le niveau de simplification mis en œuvre peuvent être adaptés en fonction des capacités de calcul de moyens informatiques qui sont destinés à être utilisés comme support de production d'un flux d'images en réalité augmentée et dans lequel une représentation graphique de la pièce obtenue à partir du maillage est destinée à être insérée.

Une division du maillage M₁₀ ou M'₁₀, encore appelée « découpage », visant à le séparer en plusieurs parties peut être également effectuée.

Une telle étape peut être réalisée par exemple afin d'isoler et éventuellement de reconstruire une portion de maillage correspondant à une surface particulière de l'objet 10 scanné, par exemple un alésage, dans le but de pouvoir faciliter un éventuel traitement ultérieur ou de pouvoir le mettre en exergue par le biais d'un affichage particulier. La portion isolée peut être dupliquée et une copie peut être traitée ensuite en tant que maillage indépendant.

Un tel traitement et un tel affichage peuvent être réalisés par exemple par le biais d'un module du troisième outil logiciel, par exemple du module « Catia Composer ».

Le découpage est réalisé en effectuant tout d'abord une sélection de cellules en particulier de triangles dans le but de séparer le maillage en au moins deux maillages distincts.

Lors de cette étape on peut conserver le maillage initial et créer deux nouveaux maillages, chacun étant l'une des deux parties, sélectionnée ou non du maillage initial. Le maillage initial peut servir à la reconnaissance ou au suivi (tracking) d'objets réalisé pour implémenter une séquence d'images en réalité augmentée.

Une éventuelle nouvelle opération de découpe peut être alors réalisée sur l'un de ces maillages.

La sélection et suppression de cellules pour effectuer ce découpage peut être réalisée comme dans l'exemple de réalisation illustré sur la figure 9, avec une zone de sélection 101, de dimension inférieure à celle d'une surface 102 à traiter, et que l'on déplace. Selon un autre exemple de réalisation illustré sur la figure 10, on peut également réaliser cette sélection avec une zone de sélection 101' appelée « trappe » de dimension et de forme correspondant à celle d'une surface 102' à traiter, autrement dit que l'on souhaite découper.

Dans l'exemple de réalisation illustré sur les figures 11 et 12, pour permettre de localiser de manière plus précise la zone de sélection 101" de type trappe ou lorsque la forme de la zone de sélection est difficile à réaliser à la main par un utilisateur de l'outil, on peut réaliser cette zone de sélection en disposant tout d'abord plusieurs points de préférence, au moins trois points P₁, P₂, P₃ non alignés, sur une portion de maillage à sélectionner. On définit ensuite un plan PL à partir de ces trois points P₁, P₂, P₃.

Une fonctionnalité telle que celle intitulée « Part Design » de l'outil précité peut ensuite permettre d'élaborer une zone de sélection selon la géométrie désirée. Dans l'exemple de réalisation illustré sur la figure 12, la zone de sélection 101" est sous forme d'un anneau. Sur la figure 13, la zone de sélection 101" correspond cette fois à une zone non plane et formée de plans PL, PL' distincts et non parallèles.

D'autres formes de zones de sélection que celles décrites et illustrées précédemment peuvent être mises en œuvre. Il est possible en particulier de réaliser des zones de sélections avec un contour réalisant des courbes.

Il est également possible à ce stade ou à partir du maillage M'₁₀ simplifié obtenu précédemment à nouveau d'effectuer une ou plusieurs corrections, et en particulier de réaliser une suppression d'élément(s) de maillage tel qu'au moins un point, au moins une arête, au moins une cellule par exemple sous forme d'un triangle. Une telle étape peut permettre de réparer d'éventuelle(s) erreur(s) sur le maillage d'origine ou bien une éventuelle erreur introduite lors de l'étape de découpe précédemment évoquée.

Il est également possible d'effectuer une ou plusieurs corrections sur le maillage M'₁₀ simplifié ou sur l'un de ceux obtenus après découpe cette fois en ajoutant un ou plusieurs éléments de maillage par exemple en effectuant un ajout de cellules, en particulier de cellules triangulaires.

De manière optionnelle, il est également possible de fusionner plusieurs maillages distincts. Par exemple à un maillage représentatif de la pièce 10 ou de l'élément 10 complet on adjoint ou l'on accole au moins un maillage supplémentaire, par exemple un maillage représentatif d'un alésage et/ou ou d'une zone chromée ou d'un épaulement peut être adjoint à un maillage représentatif d'une pièce comportant cet alésage, cette zone chromée ou cet épaulement.

Un autre exemple de fusion de maillage peut consister par exemple à réunir toutes les parties d'une pièce ayant des similitudes de forme. Par exemple, on peut réaliser ainsi un maillage résultant dans lequel tous les trous d'une pièce sont représentés. D'autres d'associations de formes telles que par exemple des alésages, biseaux, bossages, dents, entailles, épaulements, évidements, fentes, gorges, nervures, saillies, peuvent être également réalisés.

Le ou les maillages supplémentaires peuvent avoir des représentations graphiques différentes de celles du maillage d'origine, par exemple des couleurs différentes afin de les mettre en exergue.

Une étape dite « de reconstruction » peut être ensuite effectuée. Cette étape correspond à l'ajout à un maillage obtenu par le biais de l'une ou l'autre des étapes de traitement décrites précédemment d'une ou plusieurs portions correspondant à des parties de la pièce 10 scannée qui ne sont pas situées dans le champ de vision du scanner lors de l'étape de numérisation, et en particulier d'éléments géométriques internes de la pièce 10.

On peut effectuer cette étape à l'aide du troisième outil logiciel et en particulier un outil de CAO. Par exemple on peut utiliser le logiciel CATIA^{®} et son module intitulé « Part Design » pour la conception de modèles en 3D. D'autres outils de CAO tels que « SolidWorks » ou de modélisation 3D tel que « Blender » ou « 3Ds Max », voire « Rhinoceros 3D » peuvent être également utilisés pour réaliser une telle reconstruction. La reconstruction peut être réalisée en utilisant une fonctionnalité de dessin d'un des outils précités afin d'ajouter un ou plusieurs motifs manquants.

Au préalable à une telle reconstruction on peut définir un plan de travail dans l'outil de CAO. Une telle définition est réalisée par sélection de trois points distincts et non alignés sur le maillage de la pièce 10 sous un format utilisable par l'outil de CAO.

Dans certains cas, comme dans l'exemple de réalisation illustré sur les figures 14A-14B (donnant respectivement une vue interne et une vue externe d'une pièce 110), la réalisation d'une reconstruction très précise peut être facultative et l'on peut souhaiter recréer une allure générale du volume interne 111 d'une pièce 110.

Dans un cas, notamment, où un dessin de définition n'est pas disponible mais que la géométrie de la pièce est connue, et en particulier qu'un plan de phase est disponible, on peut réaliser une reconstruction à l'aide de projections de points d'un maillage et d'opérations de mise en forme.

Dans les exemples illustrés sur les figures 15 et 16 on réalise une projection d'une zone 121, 121' d'un maillage M₁₀₀, M'₁₀₀ obtenue à l'aide de traitements tels que décrit précédemment, afin d'adjoindre une portion de maillage supplémentaire à ce maillage et de le compléter.

Un autre type de reconstruction illustré sur les figures 17A-17B consiste à modifier un maillage M"₁₀₀ obtenu à l'issue d'étapes telles que décrites précédemment en lui supprimant localement certaines cellules et lui en ajoutant d'autres, de sorte à réaliser un trou 131 qui s'étend dans son volume interne. Il arrive en effet qu'à ce stade le maillage résultant contienne des erreurs que l'on souhaite corriger. Par exemple, un perçage dans une pièce scannée a pu être complètement refermé du fait d'une erreur de numérisation ou d'une mauvaise interpolation.

Un modèle 3D produit à partir d'un maillage obtenu à l'aide de traitements décrits précédemment est amené, lorsqu'il est intégré à une image de réalité virtuelle, à se déplacer et/ou a une forme, une dimension, un positionnement qui sont susceptibles d'évoluer en fonction du positionnement, et de la distance à laquelle se trouve un utilisateur d'un système de projection d'image en réalité augmentée de la pièce 10. Dans une séquence d'images en réalité augmentée pour permettre un affichage correct des surfaces de la pièce 10 via une plateforme logicielle par exemple telle que « Diota Player », une solution consiste à utiliser des copies de l'un ou l'autre des maillages décrits précédemment ayant subie une étape de décalage.

Un déplacement de maillage par translation de chacun des polygones du maillage et suivant une direction parallèle à une normale à la surface des polygones peuvent être mis en œuvre. Un tel type de décalage diffère d'une homothétie dans la mesure où l'on souhaite ici préserver les diamètres internes.

Un tel déplacement peut être réalisé par exemple à l'aide d'une fonctionnalité de « décalage de maillage » de l'outil « Part Design ». Avec un tel outil, on règle un paramètre de décalage, par exemple selon un pas de décalage qui peut être compris entre 0.2 et 0.5 mm. On privilégie ici un décalage d'un maillage représentatif de l'élément 10 ou de la pièce 10 au complet plutôt que de décaler des maillages correspondant à des surfaces unitaires de la pièce 10.

Selon une variante de réalisation, lorsque la pièce ou l'élément 10 que l'on souhaite modéliser a un élément ou une pièce correspondante symétrique dans l'aéronef, on peut exposer une seule des deux pièces au scanner 3D et effectuer le ou les traitements précités à partir du nuage de points obtenus lors de cette numérisation. A partir de ce nuage de points on peut créer un modèle 3D de la pièce symétrique, en utilisation une fonctionnalité de création d'un modèle symétrique de l'un ou des outils précédemment évoqués. On peut en particulier utiliser une opération de symétrie de l'outil logiciel « Part design » Catia. On forme tout d'abord un plan de symétrie, par exemple en définissant 3 points distincts. Puis on sélectionne la pièce ou une zone de la pièce dont on souhaite créer le symétrique.

Un modèle 3D 1 obtenu à l'issue d'étapes décrites précédemment peut être ensuite importé sur un outil d'affichage d'images en réalité augmentée. L'outil en question peut être par exemple « Diota Connect for Composer » de la société Diota. Dans ce cas le modèle 3D réalisé peut être importé selon un format de type CatPart.

Sur la figure 18 une image en réalité augmentée 181 donne une vue d'un tel modèle 3D 182 de l'objet 10 obtenu par numérisation puis une succession de traitements tels que décrits précédemment. Le résultat final est proche d'un résultat qui serait obtenu en utilisant un modèle entièrement conçu par CAO.

Les figures 19A-19C montrent respectivement un maillage M₂₀ obtenu après numérisation d'une autre pièce d'aéronef tandis que les figures 20A-20C montrent un modèle 3D M'₂₀ de cette pièce obtenue après une étape de reconstruction du volume interne de la pièce 20 réalisée à partir du maillage M₂₀, ici effectuée à l'aide d'un logiciel de CAO. On a ainsi recréé une ou plusieurs surfaces internes qu'une simple acquisition au scanner ne permet pas à elle seule de produire.

Un objet virtuel superposé à un flux d'images en réalité augmentée peut être produit à l'aide d'un modèle 3D hybride formé d'un modèle 3D géométrique tel que décrit précédemment et d'un modèle paramétrique. La superposition est réalisée au moyen d'un outil logiciel de suivi d'objet encore appelé moteur de suivi d'objets et utilisant des algorithmes de suivi d'objets. De tels algorithmes comportent typiquement des étapes de prédiction de position de l'objet en connaissant certaines informations sur sa position et son mouvement, de mise en correspondance de l'objet dans une zone d'image en utilisant le modèle 3D paramétrique, traduisant notamment les déplacements, les déformations de l'objet et qui est mis à jour de manière itérative.

## Revendications

1. Procédé de réalisation d'un modèle numérique 3D d'au moins un élément (10) d'aéronef pour la production d'image(s) en réalité augmentée, le procédé comprenant des étapes consistant à :
a) exposer à un scanner (20), au moins un élément (10) d'un aéronef de sorte à produire un ensemble de points numérisés représentatifs de la forme en 3 dimensions dudit élément (10), puis à l'aide d'un ordinateur (30) et/ou d'au moins une unité de traitement informatique (30) :
b) former, à partir dudit ensemble de points numérisés, au moins un maillage 3D donné représentatif de la forme dudit élément (10),
c) modifier une réplique dudit maillage donné de sorte à ajouter au moins un motif manquant à ladite réplique et produire un modèle 3D dudit élément d'aéronef,
le procédé comprenant en outre au moins une étape de découpage d'un premier maillage correspondant audit maillage donné ou à un duplicata dudit maillage donné, le découpage étant réalisé à l'aide dudit ordinateur (30) ou de ladite unité de traitement informatique (30) et comprenant des sous-étapes consistant à :
- définir une zone de sélection (101, 101', 101") comportant une pluralité de cellules polygonales du premier maillage,
- supprimer des cellules polygonales situées dans ladite zone de sélection de sorte à former un deuxième maillage,
- définir un troisième maillage résultant de la différence entre le premier maillage et le deuxième maillage,
dans lequel la réplique dudit maillage résulte d'une adjonction du troisième maillage à un autre maillage, cet autre maillage étant obtenu par découpage du premier maillage selon une deuxième zone de sélection, ladite zone de sélection et ladite deuxième zone de sélection correspondant respectivement à des parties dudit élément (10) présentant des formes similaires.

2. Procédé selon la revendication 1, dans lequel le motif manquant correspond à un motif dudit élément (10) situé dans son volume interne et/ou qui est situé hors du champ de vision du scanner lors de l'exposition du scanner à l'étape a).

3. Procédé selon l'une des revendications 1 ou 2, dans lequel ladite réplique dudit maillage donné est obtenue à l'aide d'au moins une étape de réduction, effectuée par ledit ordinateur (30) ou ladite unité de traitement informatique (30), d'un nombre de cellules polygonales composant ledit maillage donné (M₁₀) tout en conservant une forme géométrique globale dudit maillage donné.

4. Procédé selon l'une des revendications 1 à 3, dans lequel la réplique dudit maillage donné est obtenue en réalisant une étape de correction à l'aide dudit ordinateur ou de ladite unité de traitement informatique (30), par :
- ajout d'une ou plusieurs cellules polygonales audit maillage donné et/ou,
- retrait d'une ou plusieurs cellules polygonales dudit maillage donné, et/ou
- déplacement d'une ou plusieurs cellules polygonales dudit maillage donné.

5. Procédé de production d'images en réalité augmentée d'élément (10) d'aéronef, comprenant :
- former un modèle 3D dudit élément d'aéronef à l'aide d'un procédé selon l'une des revendications 1 à 4,
- affichage dudit modèle 3D dans une séquence d'images en réalité augmentée.

6. Procédé de production d'images en réalité augmentée d'élément (10) d'aéronef selon la revendication 5, dans lequel la séquence d'images en réalité augmentée est formée à l'aide d'un outil de suivi d'objet 3D utilisant un modèle paramétrique traduisant des déplacements et déformations dudit maillage 3D donné ou de ladite réplique.

## Patentansprüche

1. Verfahren zum Herstellen eines digitalen 3D-Modells mindestens eines Luftfahrzeugelements (10) zum Erzeugen von Augmented-Reality-Bildern, wobei das Verfahren Schritte umfasst, die aus Folgendem bestehen:
a) Aussetzen mindestens eines Luftfahrzeugelements (10) einem Scanner (20), um einen Satz von digitalisierten Punkten zu erzeugen, die die dreidimensionale Form des Elements (10) repräsentieren, und dann mithilfe eines Computers (30) und/oder mindestens einer Computerverarbeitungseinheit (30):
b) Bilden mindestens eines vorliegenden 3D-Netzes aus dem digitalisierten Punktesatz, das die Form des Elements (10) repräsentiert,
c) Ändern einer Replik des vorliegenden Netzes, um mindestens ein fehlendes Muster zu der Replik hinzuzufügen und ein 3D-Modell des Luftfahrzeugelements zu erzeugen,
wobei das Verfahren ferner mindestens einen Schritt des Ausschneidens eines ersten Netzes umfasst, das dem vorliegenden Netz oder einem Duplikat des vorliegenden Netzes entspricht, wobei das Ausschneiden mithilfe des Computers (30) oder der Computerverarbeitungseinheit (30) durchgeführt wird und Unterschritte umfasst, die aus Folgendem bestehen:
- Definieren eines Auswahlbereichs (101, 101', 101"), der eine Vielzahl von polygonalen Zellen des ersten Netzes aufweist,
- Entfernen polygonaler Zellen, die sich in dem Auswahlbereich befinden, so dass ein zweites Netz gebildet wird,
- Definieren eines dritten Netzes, das sich aus der Differenz zwischen dem ersten Netz und dem zweiten Netz ergibt,
wobei die Replik des Netzes aus dem Hinzufügen des dritten Netzes zu einem anderen Netz hervorgeht, wobei dieses andere Netz durch Schneiden des ersten Netzes gemäß einem zweiten Auswahlbereich erhalten wird, wobei der Auswahlbereich und der zweite Auswahlbereich jeweils Teilen des Elements (10) mit ähnlichen Formen entsprechen.

2. Verfahren nach Anspruch 1, wobei das fehlende Muster einem Muster des Elements (10) entspricht, das sich in seinem Innenvolumen befindet und/oder sich außerhalb des Sichtfelds des Scanners befindet, wenn der Scanner in Schritt a) belichtet wird.

3. Verfahren nach einem der Ansprüche 1 oder 2, wobei die Replik des vorliegenden Netzes mithilfe mindestens eines Schrittes des Reduzierens, der von dem Computer (30) oder der Computerverarbeitungseinheit (30) durchgeführt wird, einer Anzahl von polygonalen Zellen, die das vorliegende Netz (M₁₀) bilden, erhalten wird, während eine globale geometrische Form des vorliegenden Netzes beibehalten wird.

4. Verfahren nach einem der Ansprüche 1 bis 3, wobei die Replik des vorliegenden Netzes durch Durchführen eines Schrittes des Korrigierens mithilfe des Computers oder der Computerverarbeitungseinheit (30) erreicht wird, durch:
- Hinzufügen einer oder mehrerer polygonaler Zellen zu diesem vorliegenden Netz und/oder,
- Entfernen einer oder mehrerer polygonaler Zellen aus dem vorliegenden, und/oder
- Verschieben einer oder mehrerer polygonaler Zellen des vorliegenden Netzes.

5. Verfahren zum Erzeugen von Augmented-Reality-Bildern eines Luftfahrzeugelements (10), umfassend:
- Bilden eines 3D-Modells des Luftfahrzeugelements mithilfe eines Verfahrens nach einem der Ansprüche 1 bis 4,
- Anzeigen des 3D-Modells in einer Sequenz von Augmented-Reality-Bildern.

6. Verfahren zum Erzeugen von Augmented-Reality-Bildern eines Luftfahrzeugelements (10) nach Anspruch 5, wobei die Sequenz von Augmented-Reality-Bildern mithilfe eines 3D-Objektverfolgungswerkzeugs gebildet wird, das ein parametrisches Modell verwendet und Verschiebungen und Verformungen des vorliegenden 3D-Netzes oder der Replik übersetzt.

## Claims

1. Method for creating a 3D digital model of at least one aircraft element (10) in order to produce augmented reality image(s), the method comprising steps consisting in:
a) exposing to a scanner (20) at least one element (10) of an aircraft so as to produce a set of digitised points representative of the 3-dimensional shape of said element (10), then, using a computer (30) and/or at least one computer processing unit (30):
b) forming, from said set of digitised points, at least one given 3D mesh representative of the shape of said element (10),
c) modifying a replica of said given mesh so as to add at least one missing pattern to said replica and to produce a 3D model of said aircraft element,
the method further comprising at least one step of cutting a first mesh corresponding to said given mesh or to a duplicate of said given mesh, the cutting being performed using said computer (30) or said computer processing unit (30) and comprising the sub-steps of:
- defining a selection area (101, 101', 101") including a plurality of polygon cells of the first mesh,
- deleting the polygon cells located in said selection area so as to form a second mesh,
- defining a third mesh resulting from the difference between the first mesh and the second mesh,
wherein the replica of said mesh results in adjoining the third mesh to another mesh, this other mesh being obtained by cutting the first mesh according to a second selection area, said selection area and said second selection area respectively corresponding to portions of said element (10) having similar shapes.

2. Method according to claim 1, wherein the missing pattern corresponds to a pattern of said element (10) located in its inner volume and/or which is located outside the field of view of the scanner during the exposure of the scanner in step a).

3. Method according to one of claims 1 or 2, wherein said replica of said given mesh is obtained using at least one step of reducing, carried out by said computer (30) or said computer processing unit (30), a number of polygon cells constituting said given mesh (M₁₀) while conserving an overall geometric shape of said given mesh.

4. Method according to one of claims 1 to 3, wherein the replica of said given mesh is obtained by performing a correction step using said computer or said computer processing unit (30), by:
- adding one or more polygon cells to said given mesh and/or,
- removing one or more polygon cells from said given mesh, and/or
- moving one or more polygon cells of said given mesh.

5. Method for producing augmented reality images of an aircraft element (10), comprising:
- forming a 3D model of said aircraft element using a method according to one of claims 1 to 4,
- displaying said 3D model in a sequence of augmented reality images.

6. Method for producing augmented reality images of an aircraft element (10) according to claim 5, wherein the sequence of augmented reality images is formed using a 3D tracking tool using a parametric model translating movements and deformations of said given 3D mesh or of said replica.
